**Europäisches Patentamt**

(19) **European Patent Office**

**Office européen des brevets**

(11) Publication number : **0 303 407 B1**

(12) **EUROPEAN PATENT SPECIFICATION**

(45) Date of publication of patent specification :
18.01.95 Bulletin 95/03

(51) Int. Cl.⁶ : **H04L 12/44, H04B 3/32**

(21) Application number : 88307236.5

(22) Date of filing : 05.08.88

(54) **Crosstalk reduction in unshielded twisted-pair lines.**

(30) Priority : **13.08.87 US 84960**

(43) Date of publication of application :
**15.02.89 Bulletin 89/07**

(45) Publication of the grant of the patent :
**18.01.95 Bulletin 95/03**

(84) Designated Contracting States :
**DE FR GB IT**

(56) References cited :
**EP-A- 0 161 836**
**FR-A- 2 512 300**
**THE ELECTRONIC SYSTEM DESIGN MAGAZINE, January 1987, pages 44-47, Boston, US;D. CORMIER et al.: "Dense chips ease networking"**

(73) Proprietor : **Hewlett-Packard Company**
**Mail Stop 20 B-O,**
**3000 Hanover Street**
**Palo Alto, California 94304 (US)**

(72) Inventor : **Huang, Fred G.**
**1538 Zapata Drive**
**Folsom, CA 95630 (US)**

(74) Representative : **Williams, John Francis et al**
**WILLIAMS, POWELL & ASSOCIATES**
**34 Tavistock Street**
**London WC2E 7PB (GB)**

## Description

### FIELD OF THE INVENTION

This invention relates to interconnection of electronic equipment in a local area network and, more particularly, to interconnection by full duplex unshielded twisted-pair wires of equipment in an IEEE 802.3 local network permitting data transfer at 10 million bits per second.

### BACKGROUND OF THE INVENTION

Interconnection of electronic equipment located at a premises is commonly performed by coaxial cable meeting rigorous standards. Shielded coax cable allows interconnection in a local area network (LAN) covering more than 300 linear feet distance. This is because external radio frequency (RF) energy is not induced in shielded coax cable and because crosstalk energy between parallel cables is suppressed by the use of such cable.

Installing coax cable in a premises is costly and disruptive to the work being performed. In many cases, holes must be made in walls and/or floors and, possibly, an entire subflooring must be installed, to permit routing of coax cable. Once a particular cabling arrangement is established, it can be changed only with difficulty.

Most buildings have an extensive telephone wiring system already in place. It would be highly desirable to use these twisted-pair (TP), unshielded, wires to interconnect electronic equipment, such as computers, workstations, data entry terminals, and the like. Even in buildings being planned, it would be desirable to use ordinary TP telephone wires rather than coax cable because of the formers' ease of installation and lower cost per foot.

But these unshielded TP wires act as an antenna and are susceptible to external radio frequency (RF) energy. This RF noise can swamp a signal carried by the TP wires and thus they provide very poor signal-to-noise (S/N) ratios. Particularly, when long distances such as 300 feet are involved, as would be typical of a LAN.

S/N ratios can be improved by using very high signal transmission power levels, but FCC regulations specify maximum tansmission levels and high power tansmission is costly. A better solution is to provide a totally differential balanced receiver and to filter at transmission to fall within the FCC regulations, and filter at receiver which then eliminates bulk of external RF noise susceptibility.

The use of unshielded TP wires still must overcome crosstalk noise. For instance, in a typical installation, a 25-pair bundle of wires may be used. Since these 25 pairs are in close proximity to each other, crosstalk noise can be substantial. This leads again to poor S/N ratios.

Crosstalk noise can be reduced (i) by the collision protocol employed in IEEE 802.3 LANs, as in the article by D. Cormier et al [ESD Magazine, 1/1987] and (ii) by employing two different drive levels. FR-A-2,512,300 illustrated the use of different voltage levels in a transmission system, but in that case in a half-duplex system and for a quite different purpose.

### SUMMARY OF THE INVENTION

The instant invention is employed in a distributed Star Topology LAN (STAR-LAN) of up to 300 feet lineal distance as specified in a Premises Distribution System (PDS) in which an office is wired with unshielded TP wires used for both voice and data signals. It allows transmission rates up to 10 million bits per second (mbps) without incurring significant error rates. According to the invention series of transceiver "hubs" are interconnected by unshielded TP wires. Each Hub, in turn, is interconnected to a number of transceiver "Pods"; twelve in an exemplary embodiment, via full duplex unshielded TP wires. Each Hub performs a multiport repeating function. Each Pod serves as an interconnection point of a terminal equipment with the LAN, sometimes called a medium access unit (MAU). Each Pod is preferably connected to it Hub by a four-wire full duplex pair of unshielded TP wires.

The invention permits the complete elimination of coax cable for interconnection of the electronic equipment on the LAN and the exclusive use of cheap, readily-available ordinary unshielded TP, telephone grade, wires. Thus easy installation, less-expensive per foot, less bulk, greater pliability than coax cable is obtained by the present invention. Moreover, additions, relocations, changes to the wiring network are readily performed because of the simple traditional techniques available with unshielded TP wire. Cable management is improved through the use of patch panel connections.

The present invention calls for the Hub and Pod to transmit signals at different voltage levels so as to reduce crosstalk noise among TP wires in cables terminating at the Hub. In an exemplary embodiment, 25 unshielded TP wires terminate at a Hub and if no precautions are taken, crosstalk among the TP wires would result in very poor S/N ratios, thereby generating high bit error rates.

Because of the Carrier Sensed Multi-Access (CSMA) collision detect scheme defined by the IEEE 802.3 protocol, when more than one signal is received above the collision threshold by the Hub, transmission is stopped and must be restarted again. Accordingly, the protocol allows crosstalk noise to be ignored for reception by the Hub. The concern then, is with inducing crosstalk in the signals transmitted by the Hub into the attenuated signal transmitted by the Pod as received by the Hub. If a voltage level is used by the Hub for transmission equal to that of transmission by the Pod, crosstalk will be significant in signals received at the Hub. However, if different transmission voltage levels are used by the Hub and the Pod, there will be a substantial reduction in the crosstalk noise at the Hub. Accordingly, the bit error rate will become within acceptable tolerances, even at a 10 mbps bit transmission rate.

In one embodiment of the present invention, a 7-volt transmission level is employed at the Pod and a 4-volt transmission level at the Hub.

## BRIEF DESCRIPTION OF THE DRAWINGS

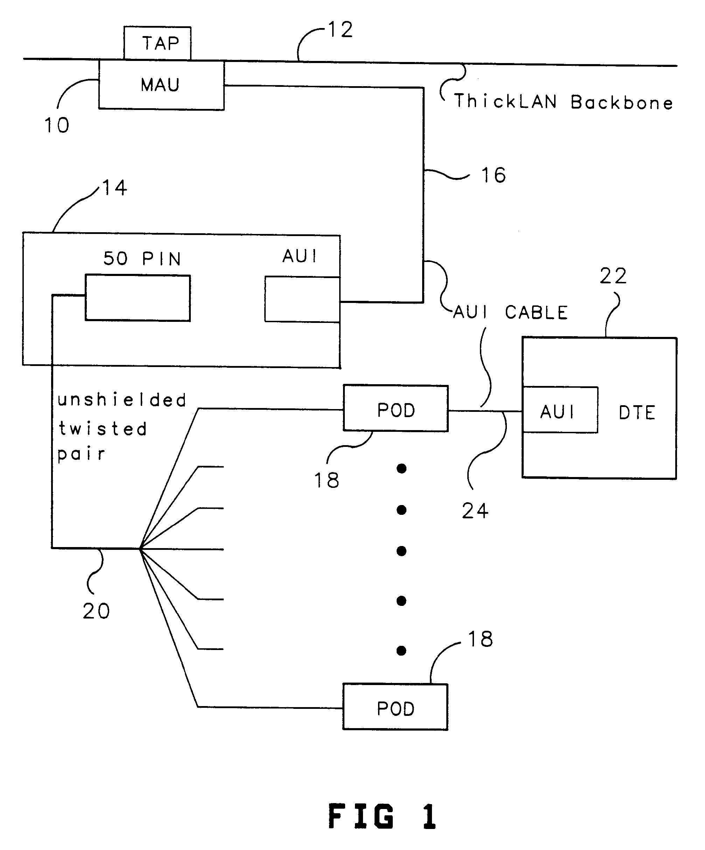

Fig. 1 is a block diagram showing a Hub-Pod configuration employed in a STAR-LAN topology, the Pod transmitting at a higher level than the Hub in accordance with the instant invention.

## DETAILED DESCRIPTION OF A PREFERRED EMBODIMENT

With reference to Fig. 1, a typical installation of a local area network (LAN) having a STAR topology is shown. A media access unit (MAU) 10 is shown tapped into a backplane 12 of the LAN. The backplane 12 may be a fiber optic cable, a coaxial cable or a twisted-pair of wires. The MAU 10 serves to connect a transceiver Hub 14 to the LAN backplane. The Hub 14 has an auxiliary unit interface (AUI) which receives an AUI cable 16 from MAU 10. The Hub 14 performs a repeating function between the LAN backplane 1/2 and a number of transceiver Pods 18 connected to the Hub.

In the LAN illustrated in Fig. 1, twelve Pods 18 are connected to the Hub 14 via twenty-four unshielded, twisted-pair (TP) wires 20. A 50-pin socket on the Hub serves to receive the 24 TP wires. Each Pod 18 is connected by two TP wires 20 to the Hub 14, thereby providing a four-wire full-duplex interconnection. Each Pod 18 is, in turn, connected to an AUI of a data terminal equipment (DTE) 22, via an AUI cable 24. Typical DTE is a microcomputer, a workstation, or a data entry terminal.

Both voice and data signals may be carried on the TP wires 20. Transmission rates up to 10 million bits per second (mbps) are to be supported by the LAN shown in Fig. 1. Up to 300 feet of lineal distance is possible between Hub 14 and DTE 22.

Familiarity with the IEEE 802.3 Local Area Network standards is helpful in understanding the invention. Especially pertinent is an understanding of the formatting of data into standard IEEE 802.3 packets. Reference can be had to a publication "Advanced Peripherals: IEEE 802.3 Local Area Network Guide" published by National Semiconductor Corp., copyright 1986, which publication is incorporated herein by reference.

Because 25 pairs of unshielded TP wires 20 come together in close proximity at the Hub 14, crosstalk is a significant concern. Such "near-end" crosstalk is related non-linearly to the number of adjacent unshielded TP wires. At the high transmission rates contemplated by the LAN employing the instant invention, errors will be induced by such crosstalk unless precautions are taken.

In accordance with the present invention, Hub 14 transmits at a lower voltage level than the Pod 18. In conjunction with the Carrier-Sensed Multi-Access/Collision Detect (CSMA/CD) protocol of the IEEE 802.3 standard, the invention decreases near-end crosstalk so that errors will not be significantly introduced into the LAN of Fig. 1.

When the Hub 14 receives a signal at any of its ports - either the AUI port or one of the 25 TP wires - it repeats it to all other ports. Significant multipair crosstalk noise is generated from the 24 TP wires 20 conducting the signal to their respective Pods 18. This crosstalk noise is picked up by the single TP wires conducting the (weaker) signal received by the Hub 14. Accordingly, errors may be introduced into the signal received by the Hub 14. In a typical installation, if the signal generated by a Pod is at a one-volt level, the signal received by Hub 14 is at a 300 millivolt level, and 100 millivolts (mv) of crosstalk noise may be introduced into this signal by the 24 other TP wires connected to the Hub 14. This results in a 3:1 S/N power ratio which is below IEEE 802.3 specifications.

Increasing the voltage level of the signal generated by the Pod 18 relative to that of the Hub 14, produces a higher S/N power ratio for the signal received by the Hub 14. Of course, this reduces the S/N power ratio for the signal received by the Pod 18. However, only one Pod 18 can be transmitting at a time, otherwise a collision is detected by Hub 14. Thus even though the Hub 14 is transmitting at a relatively lower power level than when it and the Pod 18 are transmitting at equal voltages, only one Pod signal is responsible for the presence of "near-end" crosstalk as received by the other 24 pods from Hub 14. If Hub 14 receives signals from two or more Pods 18, the CSMA/CD protocol employed by Hub 14 will terminate the transmission by the Pods, in accordance with a collision "back off" procedure.

In accordance with the present invention then, employing a higher transmission voltage level by the Pod 18 than for the Hub 14, the signal-to-crosstalk noise ratio in signals received by the Hub 18 will be optimized, thereby reducing errors, even at 10 mbps rates.

The relative voltage levels according to the present invention depend on TP cable characteristics: letting

P_RHUB = Power Received at the Hub 14
P_RPOD = Power Received at the Pod 18

P_THUB = Power Transmitted at the Hub 14

P_TPOD = Power Transmitted at the Pod 18

P_CTMP = Power of multipair crosstalk at Hub 14

C_CTMP = Coefficient of multipair crosstalk coefficient at Hub 14

P_CTIP = Power of 1 pair crosstalk at Pod 18, and

C_CTIP = 1 pair crosstalk coefficient.

Then the object of the present invention is to maximize the signal-to-noise power ratio by using different transmit level to minimize multipair crosstalk effects.

I.e., optimize

$$\frac{P\_RHUB}{P\_CTMP} = \frac{P\_RPOD}{P\_CTIP}$$

P_RHUB = P_TPOD - attenuation in cable 20

P_RPOD = P_THUB - attenuation in cable 20

P_CTMP = P_THUB $*$ C_CTMP

P_CTIP = P_TPOD $*$ C_CTIP

In general, then

$$\frac{P\_RHUB}{P\_THUB * C\_CTMP} = \frac{P\_RPOD}{P\_TPOD * C\_CTIP}$$

or

$$\frac{P\_TPOD}{P\_THUB * C\_CTMP} = \frac{P\_THUB}{P\_TPOD * C\_CTIP}$$

thus

$$\frac{P^2\_TPOD}{P^2\_THUB} = \frac{C\_CTMP}{C\_CTIP} \quad \text{(EQU. 1)}$$

Typically,

$$C\_CTMP = -30dB$$
$$C\_CTIP = -40dB$$

So EQU. 1 becomes

$$\frac{P^2\_TPOD}{P^2\_THUB} = \frac{-30dB}{-40dB} = 10$$

$$\frac{P\_TPOD}{P\_THUB} = \sqrt{10} = 3.162$$

$$\frac{V\_TPOD}{V\_THUB} = \frac{\sqrt{P\_TPOD}}{\sqrt{P\_THUB}} = \sqrt{\frac{P\_TPOD}{P\_THUB}} = \sqrt{3.162}$$

$$= 1.78$$

In accordance, then, with the instant invention, the voltage level employed by the Pod 18 for transmission to the Hub 14 is approximately 1.78 times that of voltage level employed by Hub 14 for transmission to Pod 18. For instance if a peak-to-zero voltage level of 7 volts is employed by the Pod, a peak-to-zero voltage level of 4 volts would be employed by the Hub.

## Claims

1. A network including a first transceiver and one or more second transceivers, said first transceiver receiving from at least one of said second transceivers a sequence of signals and retransmitting said sequence to other said second transceivers, characterised in that the first transceiver is connected to said two or more second transceivers by a full duplex unshielded twisted-pair wire connection, that each said second transceiver includes means which transmits said sequence at a predetermined higher second voltage level, and that said first transceiver includes means which retransmits said sequence at a predetermined first voltage level having a predetermined relationship to said second voltage level.

2. A network according to claim 1 wherein said predetermined relationship between said first and second voltage levels is given by the formula:

$$\frac{V\_SECOND}{V\_FIRST} = \sqrt{\frac{P\_TSECOND}{P\_TFIRST}}$$

where P_TSECOND and P_TFIRST is the power transmitted by said second transceiver and said first transceiver, respectively, and where

$$\frac{P\_TSECOND}{P\_TFIRST} = \sqrt{\frac{C\_CTMP}{C\_CTIP}}$$

where C_CTMP and C_CTIP is the coefficient of multipair crosstalk coefficients at said first transceiver and said second transceiver, respectively.

3. Method of reducing crosstalk in a network which comprises a first transceiver and one or more second transceivers, each connected to the first, and in which the first transceiver receives a sequence of signals from one second transceiver and retransmits the sequence to another second transceiver, characterised in that the second transceiver transmits at a second higher voltage level, and the first transceiver retransmits at a first voltage level having a predetermined relationship to the second, both transmission and retransmission taking place via full duplex unshielded twisted pair wires which connect the first transceiver to two or more second transceivers.

4. A crosstalk reducing method according to claim 3 wherein said first and second transceivers each employ a collision detection technique having a predetermined collision threshold, said method further including the step of ceasing said retransmission upon

   i) completion of said signals comprising said sequence, or

   ii) reception by said first transceiver of signals from at least two said second transceivers whereby said collision threshold is exceeded.

## Patentansprüche

1. Ein Netzwerk mit einem ersten Transceiver und einem oder mehreren zweiten Transceivern, wobei der erste Transceiver von zumindest einem der zweiten Transceiver eine Folge von Signalen empfängt und die Folge zu anderen der zweiten Transceiver weitersendet, dadurch gekennzeichnet, daß der erste Transceiver mit den zwei oder mehr zweiten Transceivern durch eine ungeschirmte paarweise verdrillte Vollduplex-Drahtverbindung verbunden ist, daß jeder der zweiten Transceiver eine Einrichtung einschließt, die die Folge mit einem vorbestimmten höheren zweiten Spannungspegel sendet, und daß der erste Transceiver eine Einrichtung einschließt, die die Folge mit einem vorbestimmten ersten Spannungspegel mit einer vorbestimmten Beziehung zu dem zweiten Spannungspegel weitersendet.

2. Ein Netzwerk gemäß Anspruch 1, bei dem die vorbestimmte Beziehung zwischen dem ersten und dem zweiten Spannungspegel durch folgende Gleichung gegeben ist:

$$\frac{V\_SECOND}{V\_FIRST} = \sqrt{\frac{P\_TSECOND}{P\_TFIRST}}$$

wobei P_TSECOND und P_TFIRST die Leistungen darstellen, die von dem zweiten Transceiver bzw. dem ersten Transceiver gesendet werden, und wobei

$$\frac{P\_TSECOND}{P\_TFIRST} = \sqrt{\frac{C\_CTMP}{C\_CTIP}}$$

Wobei C_CTMP und C_CTIP die Koeffizienten der Mehrfachpaar-Übersprechkoeffizienten an dem ersten Transceiver bzw. dem zweiten Transceiver sind.

3. Verfahren zum Reduzieren des Übersprechens in einem Netzwerk, das einen ersten Transceiver und einen oder mehrere zweite Transceiver, die mit dem ersten verbunden sind, aufweist, und bei dem der erste Transceiver eine Folge von Signalen von einem zweiten Transceiver empfängt und die Folge zu weiteren zweiten Transceivern weitersendet, dadurch gekennzeichnet, daß der zweite Transceiver mit einem zweiten höheren Spannungspegel sendet, und der erste Transceiver mit einem ersten Spannungspegel, der eine vorbestimmte Beziehung zu dem zweiten aufweist, weitersendet, wobei sowohl das Senden als auch das Weitersenden über ungeschirmte paarweise verdrillte Vollduplex-Drähte, die den ersten Transceiver mit zwei oder mehr zweiten Transceivern verbinden, stattfindet.

4. Ein Verfahren zum Reduzieren des Übersprechens gemäß Anspruch 3, bei dem der erste und die zweiten Empfänger jeweils eine Kollisionserfassungstechnik mit einer vorbestimmten Kollisionsschwelle verwenden, wobei das Verfahren ferner den Schritt des Beendens des Weitersendens beendet, bei

i) Vollendung der Signale, die die Folge umfaßt, oder
ii) Empfang von Signalen von zumindest zwei der zweiten Transceiver durch den ersten Transceiver, wodurch die Kollisionsschwelle überschritten wird.

**Revendications**

1. Un réseau incluant un premier émetteur-récepteur et un ou plusieurs deuxièmes émetteurs-récepteurs, ledit premier émetteur-récepteur recevant d'au moins l'un desdits deuxièmes émetteurs-récepteurs une séquences de signaux et retransmettant ladite séquence vers d'autres desdits deuxièmes émetteurs-récepteurs, caractérisé en ce que le premier émetteur-récepteur relié auxdits deuxièmes émetteurs-récepteurs ou davantage par une liaison filaire à paire torsadée non protégée en duplex complet, en ce que chacun desdits deuxièmes émetteurs-récepteurs inclut un moyen qui transmet ladite séquence à un deuxième niveau de tension supérieur prédéterminé, et en ce que ledit premier émetteur-récepteur inclut un moyen qui retransmet ladite séquence à un premier niveau de tension prédéterminé qui présente une relation prédéterminée avec ledit deuxième niveau de tension.

2. Un réseau selon la revendication 1, dans lequel ladite relation prédéterminée entre lesdits premier et deuxième niveaux de tension est donné par la formule:

$$\frac{V\_DEUXIEME}{V\_PREMIER} = \sqrt{\frac{P\_TDEUXIEME}{P\_TPREMIER}}$$

Où P_TDEUXIEME ET P_nTPREMIER sont les puissances transmises par ledit deuxième émetteur-récepteur et ledit premier émetteur-récepteur, respectivement, et où

$$\frac{P\_TDEUXIEME}{P\_TPREMIER} = \sqrt{\frac{C\_CTMP}{C\_CTIP}}$$

où C_CTMP et C_CTIP sont respectivement le coefficient de coefficients de couplage parasite à paires multiples audit premier émetteur-récepteur et audit deuxième émetteur-récepteur, respectivement.

3. Procédé de réduction de couplage parasite dans un réseau qui comprend un premier émetteur-récepteur et un deuxième émetteur-récepteur ou davantage, reliés chacun au premier, et dans lequel le premier émetteur-récepteur reçoit une séquence de signaux venant de l'un des deuxièmes émetteurs-récepteurs et retransmet la séquence à un autre des deuxièmes émetteurs-récepteurs, caractérisé en ce que le deuxième émetteur-récepteur transmet à un deuxième niveau de tension plus élevé, et le premier émetteur-récepteur retransmet à un premier niveau de tension présentant une relation prédéterminée avec le deuxième, la transmission et la retransmission s'effectuant l'une et l'autre à l'aide de fils à paires torsadées non protégées en duplex complet qui relient le premier émetteur-récepteur à deux deuxièmes émetteurs-récepteurs ou davantage.

4. Un procédé de réduction de couplage parasite selon la revendication 3, dans lequel le premier et les deuxièmes émetteurs-récepteurs emploient chacun une technique de détection de collisions à seuil prédéterminé de collision, ledit procédé incluant en outre l'étape consistant à cesser ladite retransmission

i) à l'achèvement desdits signaux comprenant ladite séquence,

ii) à la réception, par ledit premier émetteur-récepteur, des signaux venant d'au moins deux desdits deuxièmes émetteurs-récepteurs, ce qui provoque un dépassement du seuil de collision.

**FIG 1**